(19) Europäisches Patentamt
European Patent Office
Office européen des brevets

(11) **EP 4 541 833 A1**

(12) **EUROPEAN PATENT APPLICATION**
published in accordance with Art. 153(4) EPC

(43) Date of publication:
**23.04.2025 Bulletin 2025/17**

(21) Application number: **23824158.2**

(22) Date of filing: **09.06.2023**

(51) International Patent Classification (IPC):
*C08G 18/48* (2006.01)    *C08G 18/66* (2006.01)
*C08G 18/72* (2006.01)    *C09J 7/00* (2018.01)
*C09J 175/08* (2006.01)

(52) Cooperative Patent Classification (CPC):
**C08G 18/48; C08G 18/66; C08G 18/72; C09J 7/00;
C09J 175/08**

(86) International application number:
**PCT/KR2023/007925**

(87) International publication number:
**WO 2023/243941 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2022  KR 20220072269
07.06.2023  KR 20230073024**

(71) Applicant: **SK Chemicals Co., Ltd.
Seongnam-si, Gyeonggi-do 13494 (KR)**

(72) Inventors:
• **CHO, Han-Gyeol
Seongnam-si, Gyeonggi-do 13494 (KR)**
• **CHUNG, Jae-Il
Seongnam-si, Gyeonggi-do 13494 (KR)**
• **KIM, Min-Ki
Seongnam-si, Gyeonggi-do 13494 (KR)**

(74) Representative: **Berggren Oy
P.O. Box 16
Eteläinen Rautatiekatu 10A
00101 Helsinki (FI)**

(54) **POLYURETHANE RESIN COMPOSITION AND PREPARATION METHOD THEREFOR**

(57)    Provided are a polyurethane resin composition for hot melt adhesives, in which cyclic oligomer-removed polytrimethylene ether glycol is used, and a preparation method thereof.

EP 4 541 833 A1

**Description**

[Technical Field]

The present invention relates to a polyurethane resin composition for hot melt adhesives and a preparation method thereof.

[Background Art]

In general, items such as shoes, bags, or wallets are configured such that a variety of parts, ornaments, or fabrics for combination are attached to a main body made of a textile or a synthetic resin fabric by means of sewing or bonding. However, when they undergo the sewing process of several steps, a complex pattern of sewing lines are formed, and when used for a long time, there has been a problem in that foreign substances are caught between the sewing lines, or productivity is lowered through a number of sewing steps in the manufacturing process. Therefore, studies on a technology of thermally bonding a variety of ornaments or parts in a seamless manner using an adhesive film are being actively conducted.

Meanwhile, since an adhesive film has a relatively high melting point, it requires a relatively high temperature for thermal bonding. For this reason, there is a problem of causing some damage to an adherend or a fabric, and therefore, there is an increasing demand for a material exhibiting adhesive strength even at a low temperature for a short heating time. There is also an increasing demand for adhesives with excellent elongation and elastic recovery for application to areas requiring elasticity.

A thermoplastic polyurethane resin used as a hot melt adhesive film is mainly made by reacting a high-molecular-weight diol, such as polyester diols or polyether diols called polyols, with diisocyanate and a low-molecular-weight diol as a chain extender. These thermoplastic polyurethane hot melt adhesives have high tensile strength and elongation at break due to excellent physical properties of polyurethane resin, and are widely used for clothing because of their good texture and elasticity recovery rate.

Among them, polyether-based polyurethane has relatively low adhesive strength and mechanical properties, as compared to polyester-based polyurethane, but is suitable for use as an adhesive for clothing because it is inexpensive and has excellent flexibility, elongation, and hydrolysis resistance.

In addition, there is a growing interest in eco-friendly materials that can reduce emissions of greenhouse gas such as carbon dioxide and secure carbon credits. As a countermeasure, polyurethane industry is showing movement to reduce the carbon footprint generated during the production process by converting to biobased raw materials. In fact, plastics with a bio-based content of 25% by weight or more are given a certification label of 'bio-based plastic' to promote industrialization in the new product development. Currently commercialized biopolyols may be divided into fatty acid-based polyols using natural fat and oil-based feed stocks such as castor oil, etc., and polyester-based polyols using monomers such as diacid, diol, etc., as raw materials, which are prepared by fermentation using glucose as a feed stock. Among them, fatty acid-based polyols have a disadvantage in that mechanical properties of the prepared polyurethane are lowered because primary and secondary alcohols are mixed, resulting in a difference in polarity from existing petroleum-based polyols, which reduces reactivity with diisocyanate.

In addition, polyester-based polyols are represented by polytrimethylene succinate prepared by using 1,3-propanediol (1,3-PDO) and succinic acid, and when applied to polyurethane, it shows excellent mechanical properties while showing weaknesses in low-temperature flexibility and hydrolysis resistance, etc. In contrast, polytrimethylene ether glycol (PO3G), which is prepared by using biomass-derived 1,3-PDO as a raw material, may provide the most realistic alternative for greenhouse gas reduction without reducing the quality of polyurethane. In this respect, studies on industrial application thereof is continuously conducted.

A polymerization method of PO3G is to react 1,3-PDO under an acid catalyst for a long time, however, in this process, various oxidation by-products and low-molecular-weight oligomers are produced together. Among them, cyclic oligomers may bring many side effects to industrial applications. For example, in the case of polytetramethylene ether glycol (PTMG), which is an ether-based polyol, cyclic oligomers remaining during film formation are known to cause problems such as a deterioration in mechanical properties and a blooming phenomenon, in which the cyclic oligomers migrate to the product surface to form white precipitates on the film surface.

Accordingly, studies are required to secure eco-friendliness by industrially applying PO3G prepared from bio-materials to polyurethane resins, and at the same time, to secure quality for replacing polyurethane resins which are prepared using existing petroleum-based polyols.

[Disclosure]

[Technical Problem]

There are provided a polyurethane resin composition for hot melt adhesives, in which cyclic oligomer-removed polytrimethylene ether glycol is used, and a preparation method thereof.

[Technical Solution]

To achieve the above objects, there is provided a polyurethane resin composition including a reaction product of polytrimethylene ether glycol, a chain extender, and diisocyanate, wherein the polytrimethylene ether glycol has a cyclic oligomer content of 0.3 wt% or less.

There is also provided a method of preparing the polyurethane resin composition, the method including the step of preparing a product including polytrimethylene ether glycol by polymerizing 1,3-propanediol (step 1); the step of removing cyclic oligomers by distilling the product under conditions of a temperature of 100°C to 250°C and a pressure of 100.0 torr to 1.0 torr (step 2); the step of preparing a mixture by mixing the product including the cyclic oligomer-removed polytrimethylene ether glycol and a chain extender (step 3); and the step of preparing the polyurethane resin by adding a diisocyanate compound, a catalyst, and a viscosity modifier to the mixture (step 4).

Hereinafter, the present invention will be described in detail.

Polyurethane-based adhesives are divided into polyester polyol-based polyurethane and polyether polyol-based polyurethane. The adhesive strength of an adhesive is determined by properties of the adhesive itself and a bonding strength with an adherend. In particular, as a hot melt adhesive has a lower melting temperature, flowability becomes better at the bonding temperature, and thus it has excellent adhesive strength with an adherend having an uneven structure on the surface, such as fabrics.

In general, polyester polyol-based polyurethane adhesives have a property of excellent mechanical strength, but have a low bonding strength with an adherend due to their high melting temperature, and there may be a problem of causing damage to the fabric due to high bonding temperature.

The present invention relates to a polyurethane resin composition, in which polytrimethylene ether glycol among polyether polyols is used instead of polyester polyol, and since the polyurethane resin composition according to the present invention has a low melting temperature, the above problems may be solved. Further, as compared to the existing polytetramethylene glycol, the number of carbon atoms in the repeating unit is small, and therefore, the elongation of the adhesive is excellent. Furthermore, it was confirmed that polytrimethylene ether glycol prepared from biomass raw materials showed superior adhesive strength and flexibility properties, as compared to polyester-based bio polyols prepared from other biomass raw materials.

On the other hand, the polytrimethylene ether glycol is obtained by condensation polymerization of 1,3-propanediol (1,3-PDO), and includes a significant level of oligomers in the product. Among the oligomers, cyclic oligomers cause a blooming phenomenon, when applied to polyurethane-based adhesives, which causes deterioration of mechanical properties and adhesive strength.

Accordingly, the present invention is characterized in that the cyclic oligomers in the polytrimethylene ether glycol are selectively removed to reduce the content below a predetermined level, and therefore, even when the polyurethane resin composition is prepared using the polytrimethylene ether glycol, adhesive strength and mechanical properties are excellent.

Preferably, in the polytrimethylene ether glycol, the content of cyclic oligomers is 0.3 wt% or less, 0.25 wt% or less, 0.2 wt% or less, 0.15 wt% or less, 0.1 wt% or less, 0.09 wt% or less, 0.08 wt% or less, 0.07 wt% or less, 0.06 wt% or less, or 0.05 wt% or less. On the other hand, the 'cyclic oligomer' refers to a substance having a cyclic chemical structure in which 1,3-PDO loses its functional group by an intramolecular reaction during condensation polymerization, and in particular, in the present invention, it refers to a highly volatile dimer to pentamer (2 monomers to 5 monomers are polymerized), which causes problems in the use of products. In addition, the theoretical lower limit of the content of cyclic oligomers in the polytrimethylene ether glycol is 0 wt%, but it may be, for example, 0.001 wt% or more, 0.002 wt% or more, 0.003 wt% or more, 0.004 wt% or more, or 0.005 wt% or more.

Preferably, a molecular weight distribution of polytrimethylene ether glycol is 1.0 or more, 1.1 or more, 1.2 or more, 1.3 or more, 1.4 or more, or 1.5 or more; and 3.0 or less, 2.9 or less, 2.8 or less, 2.7 or less, 2.6 or less, or 2.5 or less. As described below, the above molecular weight distribution is not significantly reduced in the molecular weight distribution of polytrimethylene ether glycol prepared from 1,3-PDO. In other words, it means that, in the polytrimethylene ether glycol according to the present invention, only the components affecting the physical properties of polytrimethylene ether glycol are effectively removed.

Preferably, in the polytrimethylene ether glycol, the content of 1,3-propanediol is 0.1 wt% or less. More preferably, the content of 1,3-propanediol in the polytrimethylene ether glycol according to the present invention is 0.09 wt% or less, 0.08 wt% or less, 0.07 wt% or less, 0.06 wt% or less, or 0.05 wt% or less. In addition, the theoretical lower limit of the content of 1,3-propanediol in the polytrimethylene ether glycol is 0 wt%, but it may be, for example, 0.001 wt% or more, 0.002 wt% or more, 0.003 wt% or more, 0.004 wt% or more, or 0.005 wt% or more.

Preferably, a number average molecular weight of the polytrimethylene ether glycol is 500 to 4,000. More preferably, the number average molecular weight of the polytrimethylene ether glycol according to the present invention is 600 or more, 700 or more, 800 or more, 900 or more, or 1,000 or more; and 3,800 or less, 3,600 or less, 3,400 or less, 3,200 or less, or 3,000 or less.

Preferably, the chain extender includes one or more selected from the group consisting of ethylene glycol, diethylene glycol, propylene glycol, dipropylene glycol, 1,3-butanediol, 1,4-butanediol, 2-methylpentanediol, 1,5-pentanediol, 1,6-hexanediol, 1,4-cyclohexanediol, 1,4-cyclohexanedimethanol, 3-methyl-1,5-pentanediol and neopentyl glycol. More preferably, the chain extender is 1,6-hexanediol.

The diisocyanate may be exemplified by aromatic isocyanates, aliphatic diisocyanates, or cycloaliphatic diisocyanates. Preferably, the diisocyanate may be selected from the group consisting of naphthalene diisocyanate, diphenyl methane diisocyanate (MDI), toluene diisocyanate (TDI), tolidine diisocyanate (TODI), p-phenyl diisocyanate (PPDI), hexamethylene diisocyanate (HDI), dicyclohexylmethane diisocyanate (H12MDI), isophorone diisocyanate (IPDI), and mixtures of two or more thereof.

Preferably, the polytrimethylene ether glycol of 50 parts by weight to 89 parts by weight, the chain extender of 1 part by weight to 10 parts by weight, and the diisocyanate compound of 10 parts by weight to 40 parts by weight may be included. More preferably, the polytrimethylene ether glycol may be included in an amount of 51 parts by weight or more, 52 parts by weight or more, 53 parts by weight or more, 54 parts by weight or more, or 55 parts by weight or more; and 85 parts by weight or less, 84 parts by weight or less, 83 parts by weight or less, 82 parts by weight or less, 81 parts by weight or less, or 80 parts by weight or less. Further, more preferably, the chain extender may be included in an amount of 2 parts by weight or more, 3 parts by weight or more, or 3.5 parts by weight or more; and 9 parts by weight or less, 8 parts by weight or less, or 7.5 parts by weight or less. Further, more preferably, the diisocyanate compound may be included in an amount of 12 parts by weight or more, 13 parts by weight or more, 15 parts by weight or more, or 17 parts by weight or more; and 38 parts by weight or less, 36 parts by weight or less, 35 parts by weight or less, or 33 parts by weight or less.

Preferably, the above-described polyurethane resin composition may have a bio content of 25 wt% or more, more preferably, 30 wt% or more, 35 wt% or more, 40 wt% or more, 45 wt% or more, or 50 wt% or more. The polyurethane resin composition may be prepared from polytrimethylene ether glycol which is prepared by polymerizing biomass-derived 1,3-propanediol, and the bio content means the content of carbon based on bio raw materials in the total carbon content of the polyurethane resin composition.

Further, the present invention provides an adhesive film including the above-described polyurethane resin composition.

Furthermore, the present invention provides a hot melt adhesive including the adhesive film.

Further, the present invention provides a method of preparing the above-described polyurethane resin composition, the method including the following steps of:

preparing a product including polytrimethylene ether glycol by polymerizing 1,3-propanediol (step 1);
removing cyclic oligomers by distilling the product under conditions of a temperature of 100°C to 250°C and a pressure of 100.0 torr to 1.0 torr (step 2);
preparing a mixture by mixing the product including the cyclic oligomer-removed polytrimethylene ether glycol and a chain extender (step 3); and
preparing the polyurethane resin by adding a diisocyanate compound, a catalyst, and a viscosity modifier to the mixture (step 4).

Hereinafter, each step of the present invention will be described in detail.

**Step 1**

The step 1 of the present invention is a step of preparing a product including polytrimethylene ether glycol by polymerizing 1,3-propanediol.

As long as the step 1 is a reaction for preparing polytrimethylene ether glycol from 1,3-propanediol, the reaction conditions are not particularly limited, and polytrimethylene ether glycol is preferably prepared by polycondensation of 1,3-propanediol using a polycondensation catalyst.

Specifically, as the polycondensation catalyst, the catalyst is selected from the group consisting of Lewis acids, Bronsted acids, super acids, and mixtures thereof. More preferably, the catalyst is selected from the group consisting of inorganic acids, organic sulfonic acids, heteropoly acids, and metal salts. Most preferably, the catalyst is selected from the group consisting of sulfuric acid, fluorosulfonic acid, phosphoric acid, p-toluenesulfonic acid, benzenesulfonic acid, phosphotungstic acid, phosphomolybdic acid, trifluoromethanesulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate, and zirconium triflate. The catalyst is also selected from the group consisting of zeolites, fluorinated alumina, acid-treated silica, acid-treated silica-alumina, heteropolyacids, and heteropolyacids supported on zirconia, titania, alumina, and/or silica. More preferably, sulfuric acid is used as the polycondensation catalyst.

The catalyst is preferably used at a concentration of 0.1 wt% to 20 wt%, more preferably, 1 wt% to 5 wt%, based on the weight of the reaction mixture.

In addition, the polycondensation is preferably carried out at 150°C to 250°C, more preferably at 160°C to 220°C. In addition, the reaction is preferably carried out in the presence of an inert gas, preferably, under nitrogen.

In addition, after the condensation polymerization, a hydrolysis reaction may be additionally carried out to remove an acid bound to polytrimethylene ether glycol. In addition, a neutralization reaction may be further carried out following the hydrolysis reaction.

### Step 2

The step 2 is a step of removing cyclic oligomers, 1,3-PDO, and oxidation by-products by distilling the product of the step 1. To this end, the thin film distillation of the step 2 is performed under conditions of a temperature of 100°C to 250°C and a pressure of 100.0 torr to 1.0 torr.

On the other hand, as used herein, the term 'thin film distillation' refers to a distillation method, in which a mixture to be separated is prepared into a thin film to increase the surface area in contact with a heat source. For example, the mixture introduced into the thin-film distiller forms a thin film on the inner wall of the thin-film distiller by a physical force (e.g., wiper), and is distilled by applying an appropriate temperature through a heat source (e.g., heating media), and thin film distillation is possible. In addition, when the pressure inside the thin-film distiller is lowered, the vapor pressure of the material is lowered, and thus there is an advantage in that evaporation occurs at a temperature lower than the original boiling point. In addition, a condenser for recovering the evaporated material, i.e., the material to be removed may be provided inside the thin film distiller.

Furthermore, the thin film distillation has an advantage that the mixture to be separated may be continuously applied. For example, it is possible to continuously perform thin-film distillation by continuously introducing the mixture to be separated into the upper part of the distiller, and recovering the purified mixture from the lower part of the distiller.

The thin-film distillation of the step 2 is carried out at a temperature of 100°C to 250°C, preferably 110°C or higher, 120°C or higher, 130°C or higher, 140°C or higher, or 150°C or higher; 240°C or lower, 230°C or lower, 220°C or lower, 210°C or lower, or 200°C or lower. When the temperature is lower than 100°C, the effect of distillation is weak, and it is difficult to remove the substance to be removed, and when the temperature is higher than 250°C, there is a concern about thermal oxidation of polytrimethylene ether glycol.

The thin film distillation of the step 2 is carried out at a pressure of 100.0 torr to 1.0 torr, preferably 90.0 torr or less, 80.0 torr or less, 70.0 torr or less, 60.0 torr or less, or 50.0 torr or less, and 5.0 torr or more, 6 torr or more, 7 torr or more, 8 torr or more, 9 torr or more, or 10.0 torr or more. When the pressure is more than 100.0 torr, there is a problem in that the separation efficiency is lowered, and when the pressure is less than 1.0 torr, there is a problem in that the separation efficiency is excessively high, and thus components that should remain in the product are separated, resulting in a lower yield of the final product.

Meanwhile, the volatilized component, i.e., the substance to be removed in the thin film distiller may be discharged to the lower part of the thin film distiller through the condenser, whereby the remaining purified mixture, i.e., distillation residues may be separately recovered.

### Step 3

The step 3 of the present invention is a step of preparing a mixture by mixing the product including the cyclic oligomer-removed polytrimethylene ether glycol and a chain extender.

The content of cyclic oligomers in the polytrimethylene ether glycol and the chain extender refer to the above descriptions.

The method of mixing the polytrimethylene ether glycol and the chain extender is not particularly limited, and generally, the materials may be injected into a stirrer, followed by mixing. At this time, it is preferable to maintain the temperature at about 60°C to about 90°C, or about 65°C to 85°C so that the mixture may maintain the liquid phase.

### Step 4

The step 4 of the present invention is a step of preparing the polyurethane resin by adding a diisocyanate compound, a catalyst, and a viscosity modifier to the mixture of the polytrimethylene ether glycol and the chain extender.

Specific type of the diisocyanate compound is as described above, and (the number of moles of NCO functional groups in the diisocyanate compound /the number of moles of OH functional groups in the polyol compound and the chain extender) is preferably about 0.8 to about 1.2, about 0.9 to about 1.1, or about 0.95 to about 1.05.

As the catalyst, a bismuth-based catalyst may be used. As the bismuth-based catalyst, for example, a catalyst including a bismuth compound such as bismuth octoate, bismuth naphthenate, bismuth propionate, bismuth neodecanoate, and bismuth trineodecanate, etc. may be used.

In addition, in order to facilitate the reactivity or processability of the prepared product, the viscosity modifier may be additionally added, and dimethylformamide (DMF) is preferably used as the viscosity modifier. When viscosity reaches a target value by continuing the reaction after adding the viscosity modifier, a reaction terminator is added and the product is cooled to obtain the polyurethane resin composition. As the reaction terminator, alcohols are used, for example, ethanol may be used.

[Effect of the Invention]

As described above, the present invention may provide a polyurethane resin for hot melt adhesives suitable for clothing by removing cyclic oligomers in polytrimethylene ether glycol, and a preparation method thereof.

[Detailed Description of the Embodiments]

Hereinafter, preferred exemplary embodiments will be provided for better understanding of the present invention. However, the following exemplary embodiments are provided only for illustrating the present invention, and the scope of the present invention is not limited thereby.

In the following Preparation Examples, Examples, and Comparative Examples, each of physical properties was measured as follows.

1) Molecular weight distribution (Mw/Mn) and Total content of oligomers (wt%)

Polytrimethylene ether glycol prepared in each Preparation Example below was dissolved at a concentration of 1 wt% in tetrahydrofuran (THF), and gel permeation chromatography (manufacturer: WATERS, model: Alliance, Detector: 2414 RI Detector, Column: Strygel HR 0.5/1/4 ) was used, and polyethylene glycol was used as a standard material to calculate a weight average molecular weight (Mw) and a number average molecular weight (Mn), respectively. From the measured Mw and Mn, a molecular weight distribution value and the content of low-molecular-weight oligomers having Mn of 400 or less were calculated.

2) Content of 1,3-PDO (wt%) and Content of cyclic oligomers (wt%)

0.5 g of polytrimethylene ether glycol prepared in each Preparation Example below was dissolved in 10 mL of methanol, followed by measurement using gas chromatography (model: agilent 7890, column: DBWAX), and 1 g of each reference material was dissolved in 10 mL of methanol. After further dilution according to concentrations and measurement using a standard reference, the content (wt%) of 1,3-PDO and the content (wt%) of cyclic oligomers included in polytrimethylene ether glycol were calculated.

3) OHV

6 g of polytrimethylene ether glycol prepared in each Preparation Example below and 15 mL of an acetylation reagent (acetic anhydride/pyridine = 10/40 vol%) were injected into a 100 mL flask and allowed to react at 100°C for 30 minutes under a reflux atmosphere. After the reaction, cooling was performed to room temperature, and then 50 mL of distilled water was injected. The reactant prepared above was titrated with 0.5 N KOH using an automatic titrator (manufacturer: metrohm, Titrino 716), and OHV was calculated according to Mathematical Equation 1 below.

[Mathematical Equation 1]

$$OHV = 56.11 \times 0.5 \times (A - B) / \text{sample feeding amount}$$

in Mathematical Equation 1,

56.11 represents a molecular weight of KOH,
0.5 represents a normal concentration of KOH,
A represents a dispensed amount of KOH solution used in a blank test, and

B represents a dispensed amount of KOH solution used in sample titration.

The measured OHV was converted into an end-group average molecular weight (Mn) according to the following Mathematical Equation 2.

[Mathematical Equation 2]

$$Mn = (56.11 \times 2 / OHV) \times 1000$$

**Preparation Example 1: Preparation of polyol**

**1) Preparation of polyol A**

Step a)

Biomass-derived 1,3-propanediol (15 kg) and sulfuric acid (150 g) were charged into a 20 L GLASS double jacket reactor equipped with a stirrer made of Teflon and a sparger, and then a polymer was prepared at 166°C under nitrogen sparging for 16 hours, and reaction by-products were removed through an upper condenser.

Step b)

Then, deionized water (5 kg) was added, and the resulting mixture was maintained at 95 °C for 4 hours under nitrogen blowing to hydrolyze acid esters formed during polymerization. After hydrolysis, 170 g of soda ash in 1000 mL of deionized water was added and the mixture was heated to 80°C while stirring under a nitrogen stream. Neutralization was continued for 1 hour, and subsequently, the product was dried at 120°C under reduced pressure and filtered using a Nutche filter to obtain a polytrimethylene ether glycol product.

**2) Preparation of polyol B**

A polytrimethylene ether glycol product was obtained in the same manner as in the preparation method of Polyol A, except that the reaction time was changed from 16 hours to 26 hours in the step a).

The physical properties of polyol A and polyol B prepared above are shown in Table 1 below.

[Table 1]

| | OHV | End-group titrated Mn | Poly dispersity | Content of cyclic oligomers (wt%) | Linear Dimer (wt%) | Content of total oligomers (wt%) | Content of PDO (wt%) |
|---|---|---|---|---|---|---|---|
| Polyol A | 121.96 | 920 | 1.6 | 0.68 | 0.35 | 5.3 | 0.82 |
| Polyol B | 59.94 | 1872 | 2.3 | 0.41 | 0.19 | 3.4 | 0.23 |

**Preparation Example 2: Removal of cyclic oligomers through thin-film distillation**

Purification of each polyol prepared in Preparation Examples was performed using a lab-scale thin film distillation equipment.

In detail, the thin-film distillation equipment was VTA's VKL-70-4 model, and was a short path distillation type, in which a condenser was installed inside a distillation column, and has an evaporation diameter of 70 mm and a surface area of 0.04 m$^2$. When the distillation column jacket was set to an appropriate temperature by a hot oil system and the inside of the column reached a target vacuum level due to a vacuum pump, each of the samples previously prepared was introduced into the upper portion of distillation at an appropriate feed rate. At this time, polytrimethylene ether glycol formed a thin film with a uniform thickness inside the column by a mechanical stirrer equipped with a wiper, and the evaporated low-molecular-weight materials were condensed in the internal condenser and discharged toward a distillate, and purified polytrimethylene ether glycol was discharged as a residue.

A test was performed on each prepared polyol for 1 hour at a feed rate of 1 kg/hr, and after the test, sampling was performed to measure physical properties, and the results are shown in Table 2 below.

[Table 2]

|  | Unit | Polyol C | Polyol D |
|---|---|---|---|
| Feed polyol | - | Polyol A | Polyol B |
| Feed rate | kg/hr | 1 | 1 |
| Evap. Temp. | °C | 150 | 180 |
| Internal condenser Temp. | °C | 50 | 50 |
| Vacuum level | torr | 20 | 10 |
| Distillate | wt% | 0.4 | 0.3 |
| Residue | wt% | 99.6 | 99.7 |
| OHV | - | 117.86 | 58.74 |
| End-group average Mn | g/mol | 952 | 1910 |
| Polydispersity | - | 1.5 | 2.2 |
| Content of cyclic oligomers | wt% | 0.03 | 0.02 |
| Content of 1,3-PDO | wt% | 0.05 | 0.04 |
| Content of linear dimer | wt% | 0.22 | 0.09 |

**Example 1**

61.78% by weight (50 mol%) of polytrimethylene ether glycol (PO3G1000, Polyol C) having a molecular weight of 1000, which was subjected to thin-film distillation, and 7.30% by weight (50 mol%) of 1,6-hexanediol were injected into a stirrer, and mixed by stirring at a temperature of 80°C at which the composition maintained a liquid phase. 30.92% by weight of MDI (100 mol%/OH:NCO=1:1) and bismuth trineodecanoate (300 ppm) as a catalyst were gradually added thereto to prevent generation of heat. To control viscosity, dimethylformamide (DMF) was added to continue the reaction, and when the viscosity reached the target value, ethanol was added as a reaction terminator and cooled below 40°C to prepare a thermoplastic polyurethane resin. After bar coating, the prepared resin was dried in a hot air dryer at 80°C for 12 hours to produce an adhesive film with a thickness of 30 $\mu$m to 100 $\mu$m.

**Example 2**

A polyurethane resin and an adhesive film were prepared in the same manner as in Example 1, except that feeding amounts were changed as follows: 76.37% by weight (50 mol%) of polytrimethylene ether glycol (PO3G2000, Polyol D) having a molecular weight of 2000, which was subjected to thin-film distillation, 4.51% by weight (50 mol%) of 1,6-hexanediol, and 19.11% by weight of MDI (100 mol%/OH:NCO=1:1).

**Comparative Example 1**

A polyurethane resin and an adhesive film were prepared in the same manner as in Example 1, except that feeding amounts were changed as follows: 61.78% by weight (50 mol%) of polytrimethylene ether glycol (PO3G1000, Polyol A) having a molecular weight of 1000, 7.30% by weight (50 mol%) of 1,6-hexanediol, and 30.92% by weight of MDI (100 mol%/OH:NCO=1:1).

**Comparative Example 2**

A polyurethane resin and an adhesive film were prepared in the same manner as in Example 1, except that feeding amounts were changed as follows: 76.37% by weight (50 mol%) of polytrimethylene ether glycol (PO3G2000, Polyol B) having a molecular weight of 2000, 4.51% by weight (50 mol%) of 1,6-hexanediol, and 19.11% by weight of MDI (100 mol%/OH:NCO=1:1).

**Comparative Example 3**

A polyurethane resin and an adhesive film were prepared in the same manner as in Example 1, except that feeding amounts were changed as follows: 61.78% by weight (50 mol%) of polytetramethylene ether glycol (PTMG1000) having a molecular weight of 1000, 7.30% by weight (50 mol%) of 1,6-hexanediol, and 30.92% by weight of MDI (100 mol%/OH:NCO=1:1).

**Comparative Example 4**

A polyurethane resin and an adhesive film were prepared in the same manner as in Example 1, except that feeding amounts were changed as follows: 76.37% by weight (50 mol%) of polytetramethylene ether glycol (PTMG2000) having a molecular weight of 2000, 4.51% by weight (50 mol%) of 1,6-hexanediol, and 19.11% by weight of MDI (100 mol%/OH:NCO=1:1).

**Comparative Example 5**

A polyurethane resin and an adhesive film were prepared in the same manner as in Example 1, except that feeding amounts were changed as follows: 61.78% by weight (50 mol%) of poly(succinic acid/1,3-PDO) having a molecular weight of 1000, 7.30% by weight (50 mol%) of 1,6-hexanediol, and 30.92% by weight of MDI (100 mol%/OH:NCO=1:1).

**Comparative Example 6**

A polyurethane resin and an adhesive film were prepared in the same manner as in Example 1, except that feeding amounts were changed as follows: 76.37% by weight (50 mol%) of poly(succinic acid/1,3-PDO) having a molecular weight of 2000, 4.51% by weight (50 mol%) of 1,6-hexanediol, and 19.11% by weight of MDI (100 mol%/OH:NCO=1:1).

**Comparative Example 7**

A polyurethane resin and an adhesive film were prepared in the same manner as in Example 1, except that feeding amounts were changed as follows: 61.78% by weight (50 mol%) of polybutylene adipate diol (PBA-1000) having a molecular weight of 1000, 7.30% by weight (50 mol%) of 1,6-hexanediol, and 30.92% by weight of MDI (100 mol%/OH:NCO=1:1).

**Comparative Example 8**

A polyurethane resin and an adhesive film were prepared in the same manner as in Example 1, except that feeding amounts were changed as follows: 76.37% by weight (50 mol%) of polybutylene adipate diol (PBA-2000) having a molecular weight of 2000, 4.51% by weight (50 mol%) of 1,6-hexanediol, and 19.11% by weight of MDI (100 mol%/OH:NCO=1:1).

**Experimental Example**

Physical properties of the polyurethane resins or adhesive films prepared in Examples and Comparative Examples were evaluated as follows, and the results are shown in Tables 3 and 4 below.

1) Tensile strength, Elongation, 100% modulus, 300% modulus, and Elasticity

Tensile strength and elongation, 100% modulus and 300% modulus were measured using a universal testing machine (Model: Instron 4465, manufacturer: Instron) in accordance with ASTM D412 (specimen with a width of 20 mm, a length of 100 mm, and a thickness of 50 $\mu$m, a tensile rate of 500 mm/min).

2) Koefler Melting Point

The Koefler melting point was measured using a Koefler Hot bench (Karg Industrietechnik, Germany). In detail, a film with a thickness of 50 $\mu$m x a width of 1 cm x a length of 20 cm was left on a 30 cm-long metal plate with a temperature gradient from room temperature to 230°C for 30 seconds, and then the temperature of the metal plate at the part of the film broken by lifting was indicated as a melting point (the temperature of the metal plate was measured using six materials with melting points between Stearinsaure 69.7°C and Saccharin 226.5°C).

3) Bio content (wt%)

The bio-based carbon content of Preparation Example in the total carbon content of the polyurethane resins prepared in Examples and Comparative Examples was measured.

4) Adhesive strength

TPU fabric (VENTWIN, VENTWIN®), the adhesive films manufactured in Examples and Comparative Examples, and water-repellent polyester fabric (Sewing House, ANS-217) were bonded in this order in a heat press at 140°C for 20 seconds, and the adhesive strength was measured using a universal testing machine (500N load cell) in accordance with the method specified in ASTM D 1876 (the width of the adhesive part was 25 mm, and the tensile speed was 10 inches/min).

[Table 3]

| | | Comparative Example 1 | Comparative Example 2 | Example 1 | Example 2 |
|---|---|---|---|---|---|
| Polyol (wt%) | Polyol A | 61.78 | | | |
| | Polyol B | | 76.37 | | |
| | Polyol C | | | 61.78 | |
| | Polyol D | | | | 76.37 |
| 1,6-HD (wt%) | | 7.3 | 4.51 | 7.3 | 4.51 |
| MDI (wt%) | | 30.92 | 19.11 | 30.92 | 19.11 |
| Blooming | | O | O | X | X |
| Bio Contents (wt%) | | 61.15 | 76.06 | 61.15 | 76.06 |
| Kofler Melt temp (°C) | | 110 | 109 | 111 | 109 |
| Tensile Strength (kg/cm$^2$) | | 145.2 | 88.5 | 182.7 | 112.5 |
| Modulus @100% (kg/cm$^2$) | | 44.2 | 20.1 | 57.9 | 26.2 |
| Modulus @300% (kg/cm$^2$) | | 61.28 | 29.77 | 79.1 | 38.2 |
| Elongation (%) | | 670 | 840 | 1056 | >1250 (No Break) |
| Adhesive strength (N/cm) | | 51.24 | 55.33 | 74.8 | 75.4 |

As shown in Table 3, the polyurethane adhesive films (Comparative Example 1 and Comparative Example 2) including polytrimethylene ether glycol in which cyclic oligomers remained had a blooming phenomenon in which oligomers migrate to the surface, resulting in deterioration of physical properties and adhesive strength of the adhesive films. In contrast, it was confirmed that the polyurethane adhesive films (Example 1 and Example 2) according to the present invention, which were manufactured using polytrimethylene ether glycol including cyclic oligomers at a predetermined level or below, had no blooming phenomenon and exhibited improvement in both flexibility and adhesive strength.

[Table 4]

| | | | Example 1 | Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Polyol (wt%) | Polyether Polyol | Bio | PO3G1000 | 61.78 | | | | | | | |
| | | | PO3G2000 | | 76.37 | | | | | | |
| | | Petro | PTMG1000 | | | 61.78 | | | | | |
| | | | PTMB2000 | | | | 76.37 | | | | |
| | Polyester Polyol | Bio | Bio-polyester 1000 | | | | | 61.78 | | | |
| | | | Bio-polyester 2000 | | | | | | 76.37 | | |
| | | Petro | PBA-1000 | | | | | | | 61.78 | |
| | | | PBA-2000 | | | | | | | | 76.37 |
| 1,6-HD (wt%) | | | | 7.30 | 4.51 | 7.30 | 4.51 | 7.30 | 4.51 | 7.30 | 4.51 |
| MDI (wt%) | | | | 30.92 | 19.11 | 30.92 | 19.11 | 30.92 | 19.11 | 30.92 | 19.11 |
| Bio Contents (wt%) | | | | 61.15 | 76.06 | 0 | 0 | 54.72 | 70.92 | 0 | 0 |
| Kofler Melt temp (°C) | | | | 111 | 109 | 117 | 116 | 131 | 128 | 129 | 125 |
| Tensile Strength (kg/cm$^2$) | | | | 182.7 | 112.5 | 197.5 | 146.6 | 263.2 | 191.1 | 436.6 | 400.5 |
| Modulus @100% (kg/cm$^2$) | | | | 57.9 | 26.2 | 62.1 | 25.9 | 86.5 | 47.3 | 64.0 | 60.4 |
| Modulus @300% (kg/cm$^2$) | | | | 79.1 | 38.2 | 87.8 | 38.3 | 125.8 | 67.0 | 104.4 | 80.4 |
| Elongation (%) | | | | 1056 | >1250 (No Break) | 748 | 946 | 587 | 858 | 687 | 902 |
| Adhesive strength (N/cm) | | | | 74.8 | 75.4 | 70.2 | 74.5 | 62.9 | 65.2 | 74.9 | 79.3 |

In Table 4, it was confirmed that Comparative Examples 3, 4, 7, and 8, which are polyurethane resin adhesive films including the existing petroleum-based polyols, showed excellent adhesive strength when polyester polyol was used, as compared to polyether polyol, but showed low flexibility, and therefore, they had limitations for use in adhesives for clothing with frequent deformation. It was also confirmed that the melting point of the polyurethane adhesive tended to be rather high due to the characteristics of polyester bonding, which may cause damage to the fabric to be bonded.

It was confirmed that Examples 1 and 2 according to the present invention had the excellent flexibility characteristics due to the high elongation value while showing adhesive strength equivalent to that of Comparative Examples 7 and 8 including the petroleum-based polyester polyols, and had both excellent elongation and adhesive strength, as compared to the case of using bio-polyester polyol, as in Comparative Examples 4 and 5.

## Claims

1. A polyurethane resin composition comprising a reaction product of polytrimethylene ether glycol, a chain extender, and diisocyanate,
   wherein the polytrimethylene ether glycol has a cyclic oligomer content of 0.3 wt% or less.

2. The polyurethane resin composition of claim 1, wherein the polytrimethylene ether glycol has a cyclic oligomer content of 0.05 wt% or less.

3. The polyurethane resin composition of claim 1, wherein a molecular weight distribution (Mw/Mn) of the polytrimethylene ether glycol is 1.0 to 3.0.

4. The polyurethane resin composition of claim 1, wherein the polytrimethylene ether glycol has a 1,3-propanediol content of 0.1 wt% or less.

5. The polyurethane resin composition of claim 1, wherein a number average molecular weight of the polytrimethylene ether glycol is 500 to 4,000.

6. The polyurethane resin composition of claim 1, wherein the chain extender includes one or more selected from the group consisting of ethylene glycol, diethylene glycol, propylene glycol, dipropylene glycol, 1,3-butanediol, 1,4-butanediol, 2-methylpentanediol, 1,5-pentanediol, 1,6-hexanediol, 1,4-cyclohexanediol, 1,4-cyclohexanedimethanol, 3-methyl-1,5-pentanediol, and neopentyl glycol.

7. The polyurethane resin composition of claim 1, wherein the diisocyanate is selected from the group consisting of naphthalene diisocyanate, diphenyl methane diisocyanate (MDI), toluene diisocyanate (TDI), tolidine diisocyanate (TODI), p-phenyl diisocyanate (PPDI), hexamethylene diisocyanate (HDI), dicyclohexylmethane diisocyanate (H12MDI), isophorone diisocyanate (IPDI), and mixtures of two or more thereof.

8. The polyurethane resin composition of claim 1, comprising the polytrimethylene ether glycol of 50 parts by weight to 89 parts by weight, the chain extender of 1 part by weight to 10 parts by weight, and the diisocyanate compound of 10 parts by weight to 40 parts by weight.

9. The polyurethane resin composition of claim 1, wherein the bio content is 25 wt% or more.

10. An adhesive film comprising the polyurethane resin composition of any one of claims 1 to 9.

11. A hot melt adhesive comprising the adhesive film of claim 10.

12. A method of preparing the polyurethane resin composition of any one of claims 1 to 7, the method comprising the steps of:

   preparing a product including polytrimethylene ether glycol by polymerizing 1,3-propanediol (step 1);
   removing cyclic oligomers by distilling the product under conditions of a temperature of 100°C to 250°C and a pressure of 100.0 torr to 1.0 torr (step 2);
   preparing a mixture by mixing the product including the cyclic oligomer-removed polytrimethylene ether glycol and a chain extender (step 3); and
   preparing the polyurethane resin by adding a diisocyanate compound, a catalyst, and a viscosity modifier to the mixture (step 4).

13. The method of claim 12, wherein the temperature of the step 2 is 150°C to 200°C.

14. The method of claim 12, wherein the pressure of the step 2 is 50.0 torr to 1.0 torr.

# EP 4 541 833 A1

<table>
<tr><td colspan="2" align="center">**INTERNATIONAL SEARCH REPORT**</td><td>International application No.<br>**PCT/KR2023/007925**</td></tr>
</table>

**A. CLASSIFICATION OF SUBJECT MATTER**

**C08G 18/48**(2006.01)i; **C08G 18/66**(2006.01)i; **C08G 18/72**(2006.01)i; **C09J 7/00**(2006.01)i; **C09J 175/08**(2006.01)i

According to International Patent Classification (IPC) or to both national classification and IPC

**B. FIELDS SEARCHED**

Minimum documentation searched (classification system followed by classification symbols)

C08G 18/48(2006.01); C08G 18/10(2006.01); C08G 18/66(2006.01); C08G 65/34(2006.01); C08G 65/46(2006.01); D01F 6/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리트리메틸렌 에테르 글리콜(polytrimethylene ether glycol), 사슬 연장제(chain extender), 디이소시아네이트(diisocyanate), 싸이클릭 올리고머(cyclic oligomer), 박막 증류(thin film distillation)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2008-0080610 A (E.I.DU PONT DE NEMOURS AND COMPANY) 04 September 2008 (2008-09-04)<br>See claims 1-11; and paragraphs [0002]-[0062]. | 1-14 |
| Y | KR 10-2019-0038162 A (SK CHEMICALS CO., LTD.) 08 April 2019 (2019-04-08)<br>See claims 1-8; paragraphs [0077]-[0133]; and table 1. | 1-14 |
| A | US 2002-0007043 A1 (SUNKARA, H. B. et al.) 17 January 2002 (2002-01-17)<br>See entire document. | 1-14 |
| A | KR 10-2110795 B1 (DUKSUNG CO., LTD. et al.) 09 June 2020 (2020-06-09)<br>See entire document. | 1-14 |
| A | KR 10-2009-0038858 A (MITSUBISHI CHEMICAL CORPORATION) 21 April 2009 (2009-04-21)<br>See entire document. | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2023** | **12 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/007925**

| Patent document cited in search report | | | Publication date (day/month/year) | Patent family member(s) | | | Publication date (day/month/year) |
|---|---|---|---|---|---|---|---|
| KR | 10-2008-0080610 | A | 04 September 2008 | AU | 2006-322086 | A1 | 14 June 2007 |
| | | | | AU | 2006-322086 | B2 | 12 April 2012 |
| | | | | BR | PI0620581 | A2 | 16 November 2011 |
| | | | | CA | 2627296 | A1 | 14 June 2007 |
| | | | | CN | 101326212 | A | 17 December 2008 |
| | | | | EP | 1957556 | A1 | 20 August 2008 |
| | | | | US | 2007-0129524 | A1 | 07 June 2007 |
| | | | | US | 2010-0152405 | A1 | 17 June 2010 |
| | | | | WO | 2007-067436 | A1 | 14 June 2007 |
| KR | 10-2019-0038162 | A | 08 April 2019 | CN | 111094392 | A | 01 May 2020 |
| | | | | EP | 3689943 | A1 | 05 August 2020 |
| | | | | JP | 2020-535279 | A | 03 December 2020 |
| | | | | JP | 7273806 | B2 | 15 May 2023 |
| | | | | KR | 10-2492665 | B1 | 26 January 2023 |
| | | | | TW | 201920356 | A | 01 June 2019 |
| | | | | US | 11608413 | B2 | 21 March 2023 |
| | | | | US | 2020-0277437 | A1 | 03 September 2020 |
| | | | | WO | 2019-066310 | A1 | 04 April 2019 |
| US | 2002-0007043 | A1 | 17 January 2002 | AT | 326497 | T | 15 June 2006 |
| | | | | AU | 2581401 | A | 25 June 2001 |
| | | | | CA | 2389578 | A1 | 21 June 2001 |
| | | | | CA | 2389578 | C | 03 August 2010 |
| | | | | CN | 1192048 | C | 09 March 2005 |
| | | | | CN | 1411482 | A | 16 April 2003 |
| | | | | DE | 60028086 | T2 | 21 December 2006 |
| | | | | EP | 1246861 | A1 | 09 October 2002 |
| | | | | EP | 1246861 | B1 | 17 May 2006 |
| | | | | JP | 2003-517071 | A | 20 May 2003 |
| | | | | JP | 4786847 | B2 | 05 October 2011 |
| | | | | KR | 10-0677809 | B1 | 05 February 2007 |
| | | | | KR | 10-2002-0063213 | A | 01 August 2002 |
| | | | | MX | PA02005943 | A | 28 January 2003 |
| | | | | US | 6977291 | B2 | 20 December 2005 |
| | | | | WO | 01-44348 | A1 | 21 June 2001 |
| KR | 10-2110795 | B1 | 09 June 2020 | | None | | |
| KR | 10-2009-0038858 | A | 21 April 2009 | AT | 528332 | T | 15 October 2011 |
| | | | | CN | 101484496 | A | 15 July 2009 |
| | | | | CN | 101484496 | B | 27 June 2012 |
| | | | | EP | 2042535 | A1 | 01 April 2009 |
| | | | | EP | 2042535 | A4 | 26 August 2009 |
| | | | | EP | 2042535 | B1 | 12 October 2011 |
| | | | | EP | 2246379 | A1 | 03 November 2010 |
| | | | | EP | 2246379 | B1 | 07 May 2014 |
| | | | | JP | 2008-274205 | A | 13 November 2008 |
| | | | | JP | 2008-274231 | A | 13 November 2008 |
| | | | | JP | 4246783 | B2 | 02 April 2009 |
| | | | | JP | 5412715 | B2 | 12 February 2014 |
| | | | | KR | 10-0933648 | B1 | 23 December 2009 |
| | | | | KR | 10-1409607 | B1 | 18 June 2014 |
| | | | | KR | 10-2009-0033402 | A | 02 April 2009 |

Form PCT/ISA/210 (patent family annex) (July 2022)

**INTERNATIONAL SEARCH REPORT**
Information on patent family members

International application No.

**PCT/KR2023/007925**

| Patent document cited in search report | Publication date (day/month/year) | Patent family member(s) | | Publication date (day/month/year) |
|---|---|---|---|---|
| | | US | 2009-0247658 A1 | 01 October 2009 |
| | | WO | 2008-007712 A1 | 17 January 2008 |

Form PCT/ISA/210 (patent family annex) (July 2022)